# EUROPÄISCHE PATENTSCHRIFT

(11) **EP 0 667 073 B1**
(45) Veröffentlichungstag und Bekanntmachung des Hinweises auf die Patenterteilung: **07.05.1997**
(21) Anmeldenummer: 93922490.3
(22) Anmeldetag: 12.10.1993
(51) Int. Cl.: H04L 7/033

(54) **ABTASTVERFAHREN UND -EINRICHTUNG, INSBESONDERE FÜR SCHNURLOS-TELEKOMMUNIKATIONSGERÄTE**
SCANNING METHOD AND DEVICE FOR USE IN PARTICULAR IN WIRELESS TELECOMMUNICATIONS EQUIPMENT
PROCEDE ET DISPOSITIF D'EXPLORATION, EN PARTICULIER POUR APPAREILS DE TELECOMMUNICATION SANS FIL

(30) Priorität: 30.10.1992 DE 4236775
(43) Veröffentlichungstag der Anmeldung: 16.08.1995
(73) Patentinhaber: SIEMENS AKTIENGESELLSCHAFT, 80333 München (DE)
(72) Erfinder: WEDI, Christoph, D-46397 Bocholt (DE)
(86) Internationale Anmeldenummer: DE9300973
(87) Internationale Veröffentlichungsnummer: WO9410777

(56) Entgegenhaltungen:
- EP-A- 0 268 694
- DE-A- 3 611 959
- FR-A- 2 180 988
- US-A- 5 103 466

## Beschreibung

Die Erfindung bezieht sich auf ein Abtastverfahren, insbesondere für Schnurlos-Telekommunikationsgeräte, gemäß dem Oberbegriff des Patentanspruches 1 und auf eine Abtasteinrichtung, insbesondere für Schnurlos-Telekommunikationsgeräte gemäß dem Oberbegriff des Patentanspruches 9.

Kommunikationssysteme mit Schnurlos-Telekommunikationsgeräten zur schnurlosen Übertragung von Sprach- und Nichtsprachinformationen sind in ihrer technischen Entwicklung, analog zu dem in der leitungsgebundenen Kommunikationstechnik bereits seit längerem bestehenden ISDN-Standard (Integrated Services Digital Network), an verschiedenen Standards gebunden. Neben einigen nationalen Standards und mehreren länderübergreifenden Standards, wie den CT1, CT1+ Standard auf analoger Basis und den CT2, CT3 Standard auf digitaler Basis, ist auf europäischer Ebene, analog zu dem globalen GSM-Standard (Groupe Spéciale Mobile oder Globals Systems for Mobile Communication) für den Mobilfunk, für die leistungsschwächere Schnurlos-Kommunikation zwischen mobilen Geräten (Portables) und einer ortsfesten Station (Basis) bei Reichweiten von einigen 100 m ein Standard, der sogenannte DECT-Standard (Digital European Cordless Telecommunication) geschaffen worden. Ein wesentliches Leistungsmerkmal des DECT-Standard ist es, daß die ortsfeste Station an leitungsgebundene Kommunikationsnetze (z. B. PSTN = Public Switched Telephone Network; PTN = Privat Telecommunication Network) anschließbar ist.

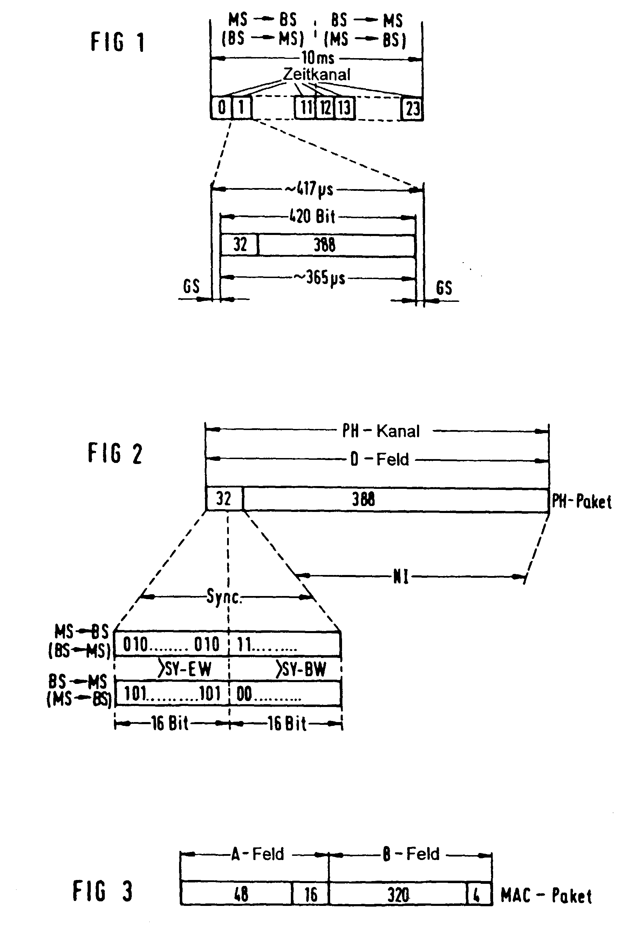

Für die schnurlose Kommunikation nach dem DECT-Standard wird eine dynamische Kanalauswahl von ca. 120 verfügbaren Kanälen durchgeführt. Die 120 Kanäle ergeben sich daraus, daß bei dem DECT-Standard zehn Frequenzbänder zwischen 1,8 und 1,9 GHz verwendet werden, wobei in jedem Frequenzband gemäß der Darstellung in Figur 1 im Zeitmultiplex (TDMA = Time Division Multiple Access) mit einem Zeitmultiplexrahmen von 10 ms gearbeitet wird. In diesem Zeitmultiplexrahmen werden 24 (von 0 bis 23) Zeitkanäle definiert und dadurch ein Rahmenschema vorgegeben. Dieses Rahmenschema wird dann derart benutzt, daß für jedes Frequenzband 12 z. B. Mobilstationen MS mit einer Basisstation BS eines DECT-Kommunikationssystems gleichzeitig im Duplexbetrieb (MS - BS und BS - MS bzw. BS - MS und MS - BS) arbeiten können. Den 24 Zeitkanälen wird dabei ein Zeitschlitz (Time Slot) von jeweils 417 µs zugeordnet.

Dieser Zeitschlitz gibt dabei die Zeit an, in der Informationen (Daten) übertragen werden. Dieses Übertragen der Informationen in Duplexbetrieb wird auch als Ping-Pong-Verfahren bezeichnet, weil zu einem bestimmten Zeitpunkt gesendet und zu einem anderen Zeitpunkt empfangen wird. Bei diesem Ping-Pong-Verfahren wird in jedem Zeitschlitz ein Zeitrahmen oder Impuls (Burst) von 365 µs, was in etwa einer Rahmenlänge von 420 Bits entspricht, mit einem Datendurchsatz von 42 kBit/s übertragen. Bezogen auf den Zeitmultiplexrahmen ergibt sich unter Berücksichtigung, daß in einem Sicherheitszeitrahmen (Guard Space = GS) an beiden Enden des Zeitrahmens jeweils 30 Bit zur Vermeidung von Überlappungen durch angrenzende Zeitschlitze zur Verfügung stehen, ein Gesamt-Datendurchsatz von 1,152 MBit/s.

Die zeitliche Aufeinanderfolge der übertragenen Impulse pro Zeitmultiplexrahmen definiert nach Figur 2 einen PH-Kanal, den sogenannten PHysical Channel, der einer physikalischen Schicht, dem sogenannten PHysical Layer (PH-L), zugeordnet ist. Das dabei übertragene Datenpaket von 420 Bits wird als PH-Paket bezeichnet und einem D-Feld zugeordnet. Von den 420 Datenbit (Folge von H/L-Bitwerten) in dem PH-Paket werden 32 Bit für die Synchronisation und 388 Bit für die Übertragung von Nutzinformationenn NI (Net Information) verwendet. Die 32 Bit für die Synchronisation unterteilen sich wiederum in zwei Datenbitfolgen von jeweils 16 Bit. Die erste Datenbitfolge (Folge mit den ersten 16 H/L-Bitwerten) ist ein Sync-Einleitungswort SY-EW, mit der die Synchronisation eingeleitet wird. Für eine Übertragungsrichtung "Mobilstation MS - Basisstation BS" besteht dieses Sync-Einleitungswort SY-EW im Idealfall aus einer periodischen "101"- oder "HLH"-Sequenz und für die umgekehrte Übertragungsrichtung "Basisstation BS - Mobilstation MS" aus einer ebenfalls periodischen "010"- oder "LHL"-Sequenz. Die in Klammer gesetzten Zuordnungen sind in Abhängigkeit davon, welche Sequenz welcher Übertragungsrichtung zugeordnet wird, alternativ möglich.

Die zweite Datenbitfolge (Folge mit den zweiten 16 H/L-Bitwerten) ist ein Sync-Bestätigungswort SY-BW mit der die mit dem Sync-Einleitungswort SY-EW eingeleitete Synchronisation bestätigt werden muß. Bei dieser Bestätigung muß das Sync-Bestätigungswort SY-BW nahezu als solches (ein Großteil der Datenbits) erkannt werden. Nur wenn dies der Fall ist, wird die mit dem Sync-Einleitungswort SY-EW eingeleitete Synchronisation akzeptiert. Die Synchronisation ist dabei eingeleitet, wenn mit gewisser Wahrscheinlichkeit davon ausgegangen werden kann, daß das Sync-Einleitungswort SY-EW eine "HLH"- bzw. "LHL"-Sequenz ist.

Darüber hinaus sind in dem DECT-Standard analog zum ISDN-Standard mit dem ISO/OSI 7-Schichtenmodell noch weitere Schichten (Layer) definiert. Eine dieser Schichten ist ein Medium Access Control Layer (MAC-L), dem gemäß Figur 3 in einem A-Feld und in einem B-Feld die 388 Bit für die Nutzinformationsübertragung zugeordnet werden. Das A-Feld umfaßt dabei 64 Bit, die unter anderem für Meldungen (Messages) beim Zusammenschluß der Basis- und Mobilstationen des DECT-Kommunikationssystems genutzt werden. Die übrigen 324 Bits des B-Feldes, von denen 320 Bit für Sprachdaten und 4 Bit zur Erkennung von Teilinterferenzen des Impulses genutzt werden, werden weiteren ISO/OSI-Schichten zugeordnet.

Das DECT-Kommunikationssystem weist in der einfachsten Form eine Basisstation mit mindestens einer Mobilstation auf. Komplexere (z. B. vernetzte) Systeme enthalten mehrere Basisstationen mit jeweils mehreren Mobil stationen. Aufgrund der 24 im DECT-Standard definierten Zeitkanäle können der Basisstation bis zu 12 Mobilstationen zugeordnet werden, die mit der Basisstation im Duplexbetrieb kommunizieren. Für den im DECT-Standard ebenfalls definierten Zeitmultiplexrahmen von 10 ms bedeutet der Duplexbetrieb, daß alle 5 ms Informationen von der Basistation zu einer Mobilstation oder umgekehrt übertragen werden.

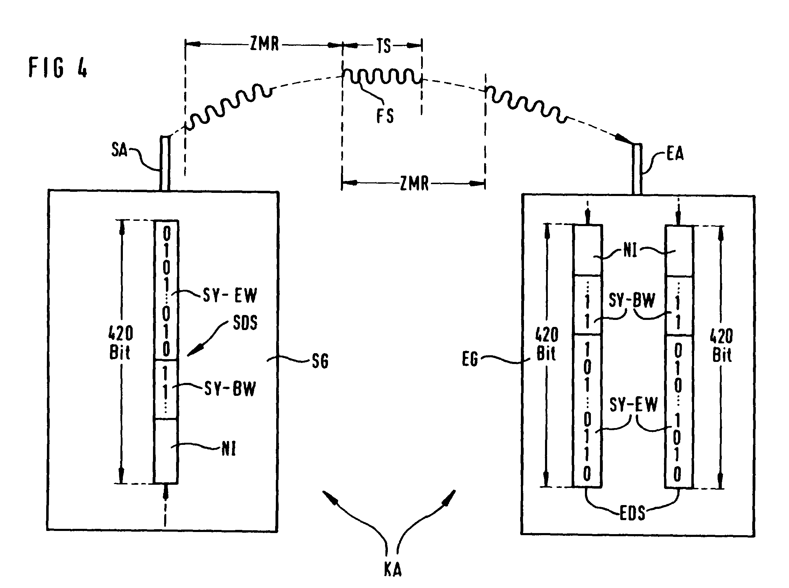

Figur 4 zeigt eine für DECT-Kommunikationssysteme typische Schnurlos-Kommunikationsanordnung KA, bei der die Mobilstation MS als Sendegerät SG und die Basisstation BS als Empfangsgerät EG dienen. Aufgrund der vorstehenden Ausführungen läßt sich die Schnurlos-Kommunikationsanordnung KA auch dahingehend modifizieren, daß die Basisstation BS als Sendegerät SG und die Mobilstation MS als Empfangsgerät EG dient. Das Sendegerät SG weist eine Sendeantenne SA auf, über die ein von dem Sendegerät SG erzeugtes Funksignal FS dem Empfangsgerät EG gesendet wird. Um das Funksignal FS empfangen zu können, weist das Empfangsgerät EG eine Empfangsantenne EA auf.

Das Funksignal FS ist gemäß der dem DECT-Kommunikationssystem zugrundeliegenden DECT-Übertragungsvereinbarung ein hochfrequentes Trägersignal mit einer Trägerfrequenz zwischen 1,8 und 1,9 GHz, das mit einem in dem Sendegerät SG vorliegenden digitalen Sendedatenstrom SDS mit einem sendegerätespezifischen Takt (Phase) moduliert wird. Der in dem Sendegerät SG vorliegende digitale Datenstrom enthält dabei die für die Schnurlosübertragung erforderlichen Informationen. Zu diesen Informationen gehören unter anderem die bereits erwähnten Synchronisations- und Nutzinformationen, die gemäß dem DECT-Standard z. B. in einem Informationspaket (PH-Paket) von 420 Bits enthalten sind. Mit diesem Informations- bzw. Datenpaket wird nun im Sendegerät SG das modulierte Funksignal FS (Trägersignal) erzeugt und gemäß der DECT-Übertragungsvereinbarung in regelmäßiger, durch den Zeitmultiplexrahmen ZMR vorgegebenen Zeitabständen für eine durch den Zeitschlitz vorgegebene Zeitdauer übertragen.

Um das übermittelte Informationspaket (übertragene Sprachinformation pro Zeitschlitz TS) entschlüsseln zu können, muß das Funksignal FS (modulierte Trägersignal) in dem Empfangsgerät EG demoduliert werden. Im Empfangsgerät EG entsteht nach der Demodulation ein digitaler Empfangsdatenstrom EDS, der bei einer störungsfreien Übertragung des Funksignals FS dieselbe Bitstruktur aufweist wie der Sendedatenstrom SDS (rechter Empfangsdatenstrom EDS) und der bei einer störungsbehafteten Übertragung des Funksignals eine gegenüber dem Sendedatenstrom unterschiedliche Bitstruktur aufweist (linker Empfangsdatenstrom). Nach dieser Demodulation des Funksignals FS und der damit verbundenen Erzeugung des Empfangsdatenstroms EDS muß dieser zur Weiterverarbeitung in dem Endgerät EG auf einen endgerätespezifischen Takt synchronisiert werden.

Aus der EP-A2-0 471 207 ist eine Schaltungsanordnung sowie ein Verfahren zum Regenerieren und Synchronisieren eines digitalen Signals bekannt, bei der bzw. dem das digitale Signal unabhängig von einer Phasenlage, einen Jitter und einen Wander zum Systemtakt auf einfache Weise und fehlerfrei regenerier- und synchronisierbar ist, indem das digitale Signal in seiner Augenmitte abgetastet wird.

Aus der EP-0 268 694 A1 ist ein Verfahren und eine Anordnung zur Synchronisation auf im Zeitmultiplexbetrieb gesendete Signale bekannt, bei der in einer Unterstation eines Nachrichtenübertragungsnetzes empfangene Signale in Taktschritten des der Unterstation eigenen Bittaktes abgetastet werden, die Abtastwerte auf Übereinstimmung mit einem in dem Zeitmultiplexrahmen gesendeten Synchronwort überprüft werden und die zeitliche Lage derjenigen das Synchronwort korrekt wiedergegebenen Abtastwerte innerhalb der Bittaktschritte ermittelt wird.

Aus der DE-36 11 959 A1 ist ein Synchronisierverfahren für im Burstbetrieb übertragene Funksignale bekannt, bei dem für eine schnelle Synchronisation der Bit- und Rahmenphase jedes Bit einer Präambel des Funksignales n-fach kontinuierlich abgetastet wird, jeweils die auf eine bestimmte Bitphase bezogenen aufeinanderfolgenden Signalabtastwerte zu Signalabtastsequenzen mit einer der Zahl der Bits der Präambel entsprechenden Anzahl gebildet werden, die Signaltastsequenzen in ihrer Aufeinanderfolge mit der empfangsseitig fest eingespeicherten Präambel auf Übereinstimmung verglichen werden und in Abhängigkeit der Vergleichsergebnisse die richtige Bit- und Rahmenphase bestimmt werden.

Aufgabe der Erfindung ist es, ein Abtastverfahren und eine Abtasteinrichtung, insbesondere für Schnurlos-Telekommunikationsgeräte, anzugeben, bei dem bzw. der aus einem Teildatenstrom eines digitalen asynchronen Datenstroms eine Abtastphase zur Synchronisation des Datenstroms auf einen Takt (Einrichtungstakt) auch bei einem im geringen Umfang gestörten Teildaten- bzw. Datenstrom (z.B. Puls-Pausen-Verhältnis des Datenstroms von 70/30) generiert wird.

Diese Aufgabe wird ausgehend von dem in dem Oberbegriff des Patentanspruches 1 definierten Abtastverfahren durch die in dem kennzeichnenden Teil des Patentanspruches 1 angegebenen Merkmale bzw. von der in dem Oberbegriff des Patentanspruchs 9 definierten Abtasteinrichtung durch die in dem kennzeichnenden Teil des Patentanspruchs 9 angegebenen Merkmale gelöst.

Bei dem Abtastverfahren bzw. der Abtasteinrichtung wird eine Abtastphase zur Synchronisation eines asynchronen Datenstroms mit Hilfe eines Soll-/Ist-Vergleichs von Subdatenbitfolgen eines datenbitweise abgetasteten synchronisationsrelevanten Teildatenstroms des Datenstroms erzeugt. Die Erzeugung der Abtastphase und die Durchführung des Vergleichs kann dabei in vorteilhafter Weise sowohl mit Software- als auch Hardwaremitteln erfolgen.

Vorteilhafte Weiterbildungen der Erfindung sind in den Unteransprüchen angegeben.

Ein Ausführungsbeispiel der Erfindung wird anhand der Zeichnungen mit den Figuren 5 bis 9 näher erläutert. Es zeigen:
Figur 5 anhand eines Blockschaltbildes den prinzipiellen Aufbau eines Schnurlos-Telekommunikationsgerätes mit einem Empfangs- und Digitalteil,
Figur 6 anhand eines Blockschaltbildes den prinzipiellen Aufbau des Digitalteils in bezug auf die Demodulation eines modulierten Analogsignales und Erzeugung einer Abtastphase zur Synchronisation eines digitalen asynchronen Datenstroms auf einen Gerätetakt,
Figur 7 zeigt anhand eines Blockschaltbildes den prinzipiellen Aufbau einer Abtastphasen-Generierungsanordnung,
Figuren 8 und 9 zeigen jeweils eine Vergleichsanordnung zur Durchführung eines Soll-/Ist-Vergleiches von Subdatenbitfolgen.

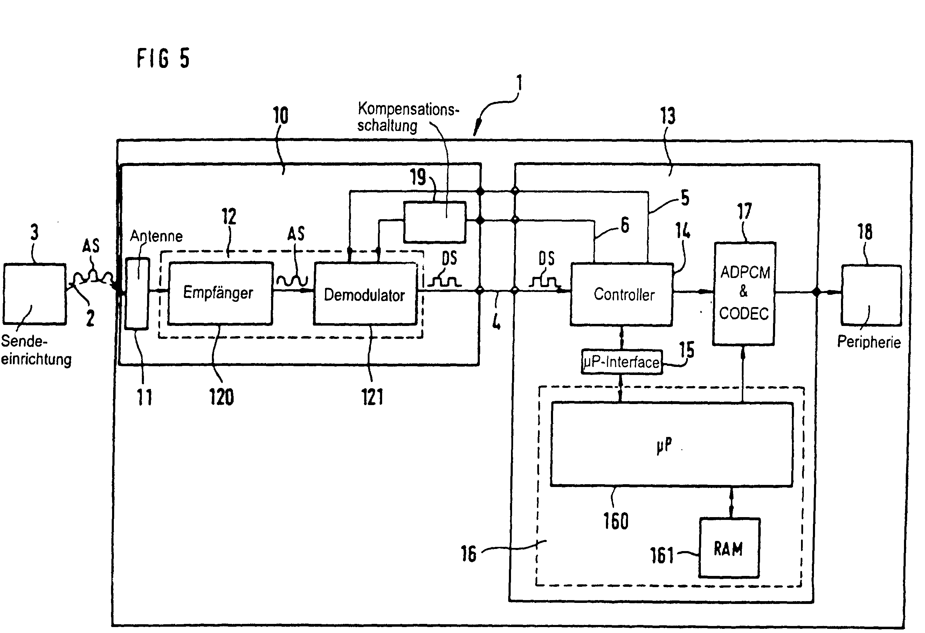

Figur 5 zeigt anhand eines Blockschaltbildes den Aufbau eines Schnurlos-Telekommunikationsgerätes 1, wie es z. B. als Basisstation oder Mobilstation in einem, insbesondere nach dem DECT-Standard definierten, Schnurlos-Kommunikationssystem verwendbar ist. Dem Schnurlos-Telekommunikationsgerät 1 sind unter anderem ein Empfangsteil 10 für den Empfang von zur Informationsübertragung modulierten analogen HF-Signalen AS, ein Digitalteil 13 zur Auswertung und Weiterverarbeitung eines aus dem jeweiligen HF-Signal AS demodulierten digitalen Datenstroms DS und ein Peripherieteil 18 zur Ausgabe bzw. Weiterleitung der mit Hilfe des HF-Signals AS und des digitalen Datenstroms DS übertragenen Informationen zugeordnet.

Das Empfangsteil 10 des Schnurlos-Telekommunikationsgerätes ist mit einer Antenne 11 als Funkschnittstelle über eine Funkübertragungsstrecke 2 mit einer das HF-Signal AS aussendenden Sendeeinrichtung 3 verbunden. Der Antenne 11 nachgeschaltet ist eine Empfangseinrichtung 12 mit einer Empfangsschaltung 120 (Empfänger) und einer Demodulationsschaltung 121 (Demodulator). Die Empfangsschaltung 120 ist in herkömmlicher Weise aufgebaut und bereitet das von der Antenne 11 empfangene modulierte analoge HF-Signal AS für die Demodulation in der Demodulationsschaltung 121 auf. Bei dieser Demodulation des HF-Signals AS entsteht am Ausgang der Demodulationsschaltung 121 der digitale Datenstrom DS. Der von der Demodulationsschaltung 121 erzeugte digitale Datenstrom DS wird bei einem Datendurchsatz von bis zu 1,152 Mbit/s (Mega Baud) über eine Datenleitung 4 von dem Empfangsteil 10 zu einer Steuereinrichtung 14 des Digitalteils 13 übertragen.

Diese hohe Übertragungsrate stellt insbesondere an die Steuereinrichtung 14, die sämtliche für die Auswertung und Weiterverarbeitung des digitalen Datenstroms DS in dem Digitalteil 13 erforderlichen Prozeduren und Abläufe steuert, hohe Anforderungen.

Von der Steuerung durch die Steuereinrichtung 14 betroffen ist unter anderem die Demodulationsschaltung 121, die über eine erste Steuerleitung 5 unmittelbar und über eine zweite Steuerleitung 6 mittelbar, über eine Kompensationsschaltung 19 des Empfangsteils 10, mit der Steuereinrichtung 14 verbunden ist.

Die Steuereinrichtung 14, die insbesondere mit dem Empfang des digitalen Datenstroms DS die Synchronisation des Digitalteils 13 auf dem demodulierten Datenstrom DS und die Vermittlung von Verbindungen im TDMA-Verfahren durchführt, ist ihrerseits über eine Busschnittstelle 15 einer Mikroprozessoranordnung 16 zugeordnet. Die Mikroprozessoranordnung 16 enthält einen Mikroprozessor 160 und einen digitalen Speicher 161, der mit dem Mikroprozessor 160 verbunden ist. Die Mikroprozessoranordnung 16 ist für sämtliche Steuerungs- und Programmierungsabläufe in dem Schnurlos-Telekommunikationsgerät 1 verantwortlich. So wird beispielsweise der Steuerbaustein 14 mittelbar über die Busschnittstelle 15 von der Mikroprozessoranordnung 16 programmiert.

Außerdem wird eine ADPCM- und CODEC-Schaltung 17 von der Mikroprozessoranordnung 16 gesteuert. Die ADPCM- und CODEC-Schaltung 17 übernimmt eine Schnittstellenfunktion zwischen der Steuereinrichtung 14 und dem Peripherieteil 18 des Schnurlos-Telekommunikationsgerätes 1. Für diese Schnittstellenfunktion wird die ADPCM- und CODEC-Schaltung 17 neben der Mikroprozessoranordnung 16 auch noch teilweise von der Steuereinrichtung 14 gesteuert. Unter dem Peripherieteil 18 sind insbesondere diejenigen Einrichtungen des Schnurlos-Telekommunikationsgerätes 1 subsummiert, die den von dem Digitalteil 13 bearbeiteten digitalen Datenstrom DS nach einer D/A-Umwandlung beispielsweise in akustische Signale umwandeln oder an ein externes analoges Kommunikationsnetz weitergeben.

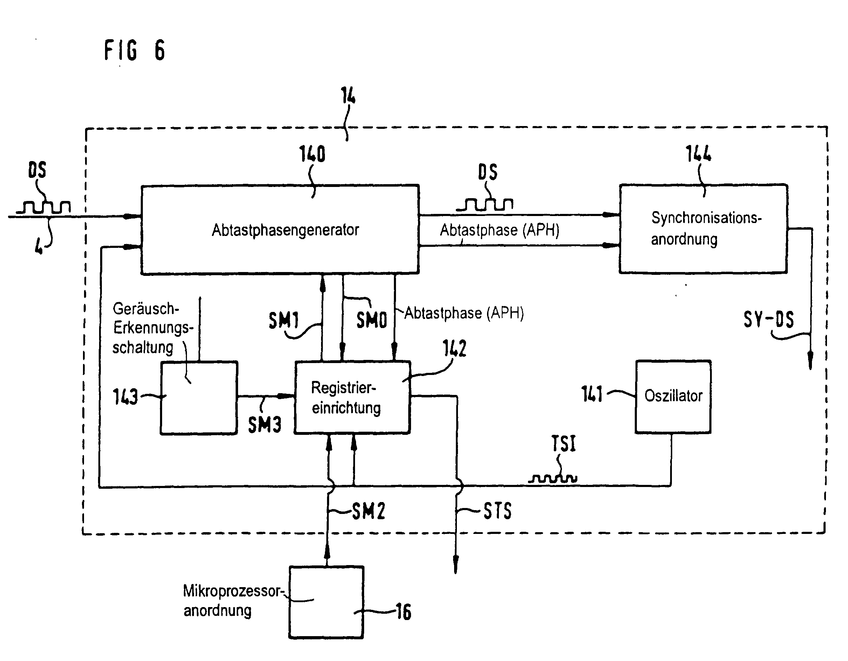

Figur 6 zeigt in einem Blockschaltbild den prinzipiellen Aufbau der - nach Figur 5 in dem Digitalteil 13 angeordneten - Steuereinrichtung 14 zur Synchronisation des von dem Empfangsteil 10 empfangenen digitalen Datenstroms DS. Die Steuereinrichtung 14 weist dazu einen Abtastphasengenerator 140 auf, dem zur Erzeugung einer Abtastphase APH der digitale Datenstrom DS zugeführt wird. Zur Erzeugung dieser Abtastphase ist der Abtastphasengenerator 140 mit einem Oszillator 141, einer Registriereinrichtung 142 und einer Geräusch-Erkennungsschaltung 143 verbunden.

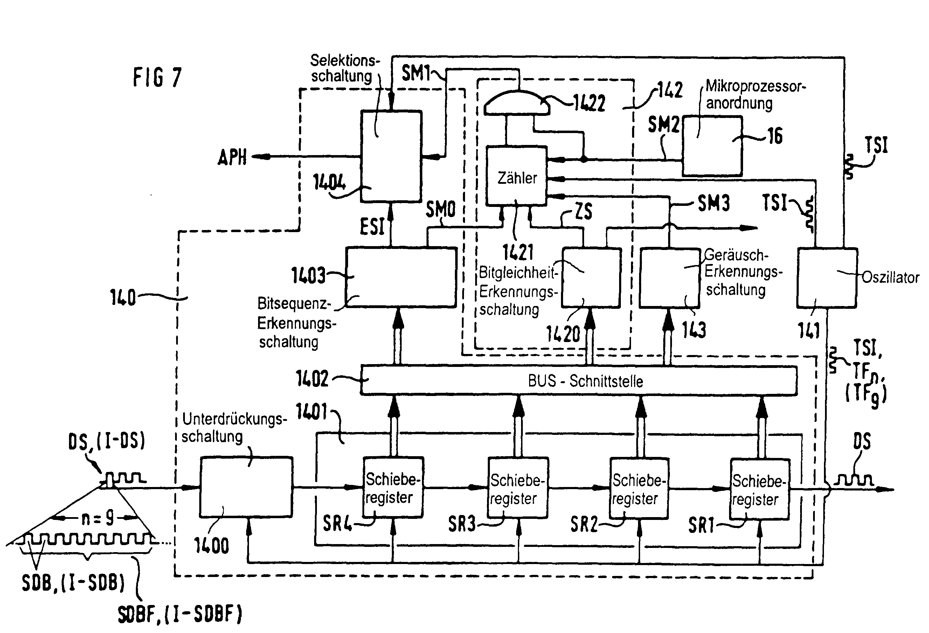

Der Oszillator 141 erzeugt ein Taktsignal TSI, dessen Taktfrequenz ein n-Vielfaches der Frequenz der Übertragungsgeschwindigkeit des digitalen Datenstroms DS ist. Das Taktsignal TSI wird neben dem Abtastphasengenerator 140 auch der Registriereinrichtung 142 zugeführt. Zwischen der Registriereinrichtung 142 und dem Abtastphasengenerator 140 werden während der Erzeugung der Abtastphase APH Statusmeldungen SM0, SM1 zyklisch (für z.B. m = 3 Zyklen) ausgetauscht. Die Registriereinrichtung 142 erhält darüber hinaus noch eine von der Mikroprozessoranordnung 16 des Digitalteils 13 erzeugte Statusmeldung SM2 und eine von der Geräusch-Erkennungsschaltung 143 generierte Statusmeldung SM3. Aus den Statusmeldungen SMO, SM2, SM3 und dem Taktsignal TSI erzeugt die Registriereinrichtung die Statusmeldung SM1, die dem Abtastphasengenerator 140 zugeführt wird. Die Statusmeldungen SMO...SM3, deren Funktion im Zusammenhang mit dem beschriebenen Aufbau der Steuereinrichtung 14 im einzelnen bei der Beschreibung der Figur 7 erläutert wird, sind dynamische, sich zeitlich ändernde Zustandsmeldungen der in der Steuereinrichtung 14 für die Erzeugung der Abtastphase angeordneten Baugruppen 140, 142, 143. Es sei an dieser Stelle erwähnt, daß die Steuereinrichtung 14 beispielsweise als integrierter ASIC-Baustein ausgebildet ist.

Mit dem Erhalt der letztmaligen Statusmeldung SM1 erzeugt der Abtastphasengenerator 140 aus dem digitalen Datenstrom DS und dem Taktsignal TSI die endgültige Abtastphase, die dann neben dem digitalen Datenstrom DS zur Synchronisation einer Synchronisationsanordnung 144 zugeführt wird. Die Synchronisationsanordnung 144 erzeugt aus dem digitalen Datenstrom DS und der Abtastphase APH einen synchronisierten digitalen Datenstrom SY-DS, der dann in der Steuereinrichtung 14 des Schnurlos-Telekommunikationsgerätes 1 weiterverarbeitet wird. Die von dem Abtastphasengenerator 140 erzeugte Abtastphase APH wird jedoch nicht nur der Synchronisationsanordnung 144, sondern auch der Registriereinrichtung 142 zugeführt. Zusammen mit dem der Registriereinrichtung 142 ebenfalls zugeführten Datenstrom DS erzeugt die Registriereinrichtung 142 das Steuersignal STS, das über die Steuerleitung 5 nach Figur 5 der Demodulationsschaltung 121 und über die Steuerleitung 6 nach Figur 5 der Kompensationsschaltung 19 des Empfangsteiles 10 zugeführt wird.

Figur 7 zeigt in einem Blockschaltbild den prinzipiellen Aufbau einer Abtastphasengenerierungsanordnung, die nach Figur 6 aus dem Abtastphasengenerator 140, dem Oszillator 141, der Registriereinrichtung 142 und der Geräusch-Erkennungsschaltung 143 besteht. Der Abtastphasengenerator 140 enthält eine Unterdrückungsschaltung 1400, eine der Unterdrückungsschaltung 1400 nachgeschalteten Registerbank 1401, eine über eine BUS-Schnittstelleneinrichtung 1402 mit der Registerbank 1401 verbundene Bitsequenz-Erkennungsschaltung 1403 und eine der Bitsequenz-Erkennungsschaltung 1403 nachgeschalteten Selektionsschaltung 1404. Der Abtastphasengenerator 140 hat dabei im Zusammenwirken insbesondere mit der Registrierungseinrichtung 142 und auch mit der Geräusch-Erkennungsschaltung 143 die Aufgabe, aus dem digitalen Datenstrom DS innerhalb einer durch das Sync-Einleitungswort SY-EW (Präambel) nach Figur 2 und 4 sowie die DECT-Übertragung vorgegebenen Zeitspanne von wenigen µs die Abtastphase APH für die Synchronisation des digitalen Datenstroms DS zu generieren.

Der dem Abtastphasengenerator 140 der Steuereinrichtung 14 zugeführte digitale Datenstrom DS wird dabei zunächst der Unterdrückungsschaltung 1400 zugeführt. Diese Unterdrückungsschaltung 1400 ist eine nach dem Schieberegisterprinzip arbeitende Schaltung, bei der zum Durchschieben von Datenströmen ein Takt angelegt werden muß. Um den digitalen Datenstrom DS durch die Unterdrückungsschaltung 1400 schieben zu können, wird das von dem Oszillator erzeugte Taktsignal TSI mit einer n-fachen Taktfrequenz TFₙ auf die Unterdrückungsschaltung 1400 gegeben. Durch das an der Unterdrückungsschaltung 1400 anliegende Taktsignal TSI wird der digitale Datenstrom DS bitweise abgetastet. Die Abtastrate wird dabei durch die Taktfrequenz TFₙ des Taktsignals TSI festgelegt. Das Ziel dieser Abtastung in der Unterdrückungsschaltung 1400 ist es, jedes einzelne Datenbit DB des digitalen Datenstroms durch mehrere diesem Datenbit DB zugeordnete Serie von Subdatenbits SDB zu beschreiben und auf Fehler zu untersuchen. Mehrere Serien dieses Subdatenbits SDB werden im folgenden als Subdatenbitfolge SDBF bezeichnet.

Für die Beschreibung bzw. Fehleruntersuchung der Subdatenbitfolge SDBF ist es vorteilhaft, wenn das einzelne Datenbit DB des digitalen Datenstroms DS so oft wie möglich abgetastet wird. Da die einzelnen Datenbits DB des digitalen Datenstroms DS mit einer Übertragungsgeschwindigkeit von 1,152 MBit/s dem Abtastphasengenerator 140 bzw. der Unterdrückungsschaltung 1400 zugeführt werden, muß für eine n-fache Abtastung des digitalen Datenstroms DS von dem Oszillator 141 im Verhältnis zu der Übertragungsgeschwindigkeit des Datenstroms DS auch eine n-mal so große Taktfrequenz TFₙ erzeugt werden. Allerdings müssen für eine solche n-fache des digitalen Datenstroms DS auch die dem Abtastphasengenerator 140 zugeordneten Teileinrichtungen 1400... 1404 für diese n-fache Abtastung ausgelegt sein. Dies gilt sowohl für den Fall, daß der Abtastphasengenerator 140, wie in Figur 7 dargestellt, als Hardware-Lösung realisiert ist, als auch für den Fall, daß der Abtastphasengenerator 140 als Software-Lösung realisiert ist. Als Kompromiß zwischen diesen beiden an die Abtastrate gestellten Bedingungen wird von dem Oszillator 141 ein Taktsignal TSI mit einer gegenüber der Übertragungsgeschwindigkeit des digitalen Datenstroms DS 9-mal so großen Taktfrequenz TFₙ (n = 9) erzeugt. Der Oszillator 141 muß somit in etwa ein Taktsignal TSI mit einer Taktfrequenz TF₉ von 10,368 MHz erzeugen.

Für den der Unterdrückungsschaltung 1400 zugeführten digitalen Datenstrom DS bedeutet dies, daß für jedes Datenbit DB, das in die Unterdrückungsschaltung 1400 hineingeschoben wird, 9 Subdatenbits SDB (Abtastwerte) erzeugt werden. Die Unterdrückungsschaltung 1400 ist z. B. von seiner Zwischenspeicherkapazität so ausgelegt, daß immer nur jeweils ein Datenbit DB des digitalen Datenstroms DS abgetastet werden kann. Es ist aber auch möglich mehr als ein Datenbit DB in der Unterdrückungsschaltung 1400 untersuchen zu lassen, wodurch sich allerdings der Schaltungsaufwand erhöht.

Die Aufgabe der Unterdrückungsschaltung 1400 ist es, eine festgestellte "HLH"- bzw. "LHL"-Bitsubsequenz (je nach dem welche Bitfolge "HLH" bzw. "LHL" des digitalen Datenstroms DS vorliegt) der Subdatenbitfolge SDBF zu erkennen und zu unterdrücken. Dadurch wird sichergestellt, daß in die Registerbank 1401 nur solche Datenbits DB des digitalen Datenstroms DS gelangen, bei denen eine Subdatenbitfolge SDBF ohne eine "HLH"- bzw. "LHL"-Bitsubsequenz vorliegt.

Die Registerbank 1401 enthält z. B. vier Schieberegister SR1...SR4, die in einer Kettenschaltung angeordnet sind. Statt der vier, Schieberegister SR1...SR4 ist es aber auch möglich, "x" (mit x > 4) Schieberegister zu verwenden. Im Interesse einer sicheren Bestimmung der Abtastphase APH bei gleichzeitigem Schutz von Fehlsynchronisationen bei Rauschverhältnissen hat es sich jedoch als besonders vorteilhaft erwiesen, nur vier Schieberegister zu verwenden. Jedes dieser vier Schieberegister SR1...SR4 wird wie die Unterdrückungsschaltung 1400 zum Durchschieben des digitalen Datenstroms DS durch die Registerbank 1401 mit dem Taktsignal TSI versorgt. Die Taktfrequenz TF₉ ist dabei wieder neunmal so groß wie die Übertragungsgeschwindigkeit des digitalen Datenstroms DS.

Darüber hinaus kann jedes der Registerbank 1401 angeordneten Schieberegister SR1...SR4, wie die Übertragungsschaltung 1400, jeweils immer nur ein Datenbit DB des Datenstroms DS zwischenspeichern. Daraus ergibt sich, daß bei der 9-fach Abtastung der Datenbits DB des digitalen Datenstroms DS 36 Subdatenbits SDB als Subdatenbitfolge SDBF in der Registerbank 1401 zwischengespeichert sind.

Im Hinblick auf einen noch später durchzuführenden Soll-/Istvergleich werden diese in der Registerbank 1401 gespeicherten Subdatenbits SDB im folgenden als Ist-Subdatenbits I-SDB bezeichnet.

In Analogie dazu ist die Subdatenbitfolge SDBF der in der Registerbank 1401 gespeicherten Ist-Subdatenbits I-SDB eine Ist-Subdatenbitfolge I-SDBF und der digitale Datenstrom DS ein Ist-Datenstrom I-DS. Die in der Registerbank 1401 zwischengespeicherte Ist-Subdatenbitfolge I-SDBF verändert sich mit jedem Takt des an den Schieberegistern SR1...SR4 anliegenden Taktsignals TSI. So ist z. B. nach 36 aufeinanderfolgenden Takten des Taktsignals TSI ein in der 9. Zwischenspeicherzelle des Schieberegisters SR4 zwischengespeichertes Ist-Subdatenbit I-SDB von der 9. Zwischenspeicherzelle des Schieberegisters SR4 bis in die 1. Zwischenspeicherzelle des Schieberegisters SR1 durchgeschoben. Die in der Registerbank 1401 zu jedem Taktzeitpunkt zwischengespeicherte Ist-Subdatenbitfolge I-SDBF wird über die BUS-Schnittstelleneinrichtung 1402 an die Bitsequenz-Erkennungsschaltung 1403, an die Geräusch-Erkennungsschaltung 143 und an eine Bitgleichheit-Erkennungsschaltung 1420 der Registrierungseinrichtung 142 übergeben.

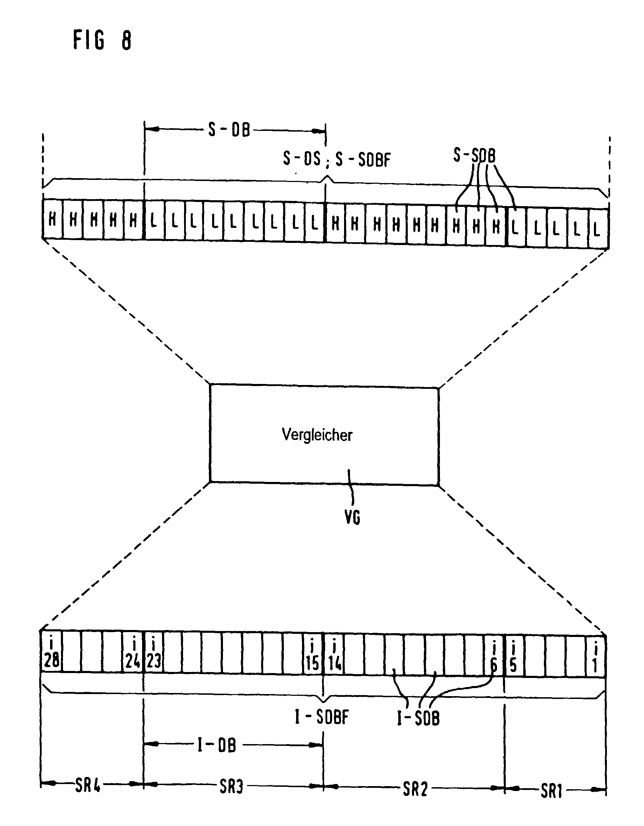

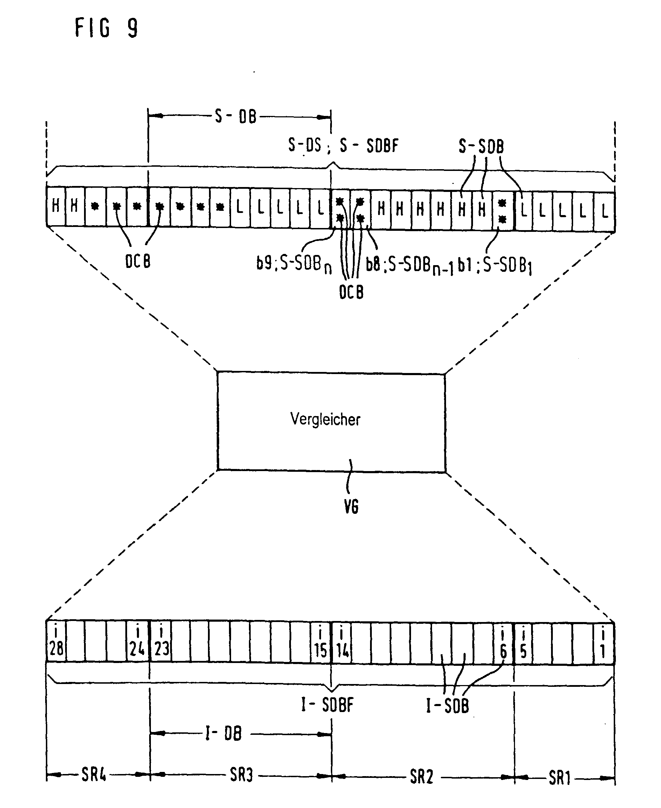

Die Bitsequenz-Erkennungsschaltung 1403 hat die Aufgabe, wie bereits der Name verrät, Bitsequenzen der Präambel des Ist-Datenstroms I-DS bzw. Datenstroms DS, z.B. die in Figur 2 dargstellten "HLH"- bzw. "LHL"-Bitsequenzen, zu erkennen. Im folgenden soll die Erkennung von einer "LHL"-Bitsequenz beschrieben werden. In der gleichen, wie nachfolgend beschriebenen Weise könnte auch die "HLH"-Bitsequenz erkannt werden, für deren Erkennung bezüglich der Figur 8 und der Figur 9 mit der Bitkombinationstabelle bei der "LHL"-Bitsequenzerkennung inverse Verhältnisse vorliegen.

Für die "LH"-Bitsequenzerkennung wird in der Bitsequenz-Erkennungsschaltung 1403 die jeweilige in der Registerbank 1401 zwischengespeicherte Ist-Subdatenbitfolge I-SDBF mit einer Soll-Subdatenbitfolge S-SDBF von Soll-Subdatenbits S-SDB eines Soll-Datenbits S-DB von einem Soll-Datenstrom S-DS verglichen. Dieser Vergleich kann entweder durch einen in der Bitsequenz-Erkennungsschaltung 1403 angeordneten Vergleicher VG (z. B. einen Mikroprozessor) oder programmunterstützt durchgeführt werden.

Figur 8 zeigt ein Beispiel zur Durchführung dieses Soll-/ Ist-Vergleiches in der Bitsequenz-Erkennungsschaltung 1403. In diesem Beispiel wird davon ausgegangen, daß von den maximal 36 Ist-Subdatenbits I-SDB der in der Registerbank 1401 zwischengespeicherten IST-Subdatenbitfolge I-SDBF lediglich 28 (i1...i28) Ist-Subdatenbits I-SDB für den Vergleich verwendet werden. Alternativ ist aber auch möglich noch weniger Ist-Subdatenbits I-SDB für die "LHL"-Bitsequenzerkennung zu betrachten, um den Schaltungsaufwand zu verringern. Hierbei muß aber stets sichergestellt sein, daß die "LHL"-Bitsequenz noch einwandfrei erkannt werden kann.

Nach Figur 8 sind von den 28 Ist-Subdatenbits I-SDB z.B. 5 Ist-Subdatenbits I-SDB aus dem Schieberegister SR1, 9 Ist-Subdatenbits I-SDB aus dem Schieberegister SR2, weitere 9 Ist-Subdatenbits I-SDB aus dem Schieberegister SR3 und 5 Ist-Subdatenbits I-SDB aus dem Schieberegister SR4. Diesen 28 Ist-Subdatenbits I-SDB wird für den Vergleich die gleiche Anzahl von Soll-Subdatenbits S-SDB der Soll-Subdatenbitfolge S-SDBF zugeordnet. Die Soll-Subdatenbitfolge S-SDBF umfaßt dabei Soll-Subdatenbits S-SDB, die man aufgrund der DECT-Übertragungsvereinbarung aus dem Ist-Datenstrom I-DS erhalten würde, wenn die von dem Schnurlos-Telekommunikationsgerät 1 empfangenen HF-Signale AS störungsfrei übertragen würden.

Für die "LHL"-Bitsequenzerkennung ergibt sich somit die in Figur 8 dargestellte Serie von H-/L-Bitwerten. Bei dieser in Figur 8 dargestellten Soll-Subdatenbitfolge S-SDBF werden jedoch nur solche "LHL-Bitsequenzen der Präambel erkannt, die ein optimales (50/50) Puls/Pause-Verhältnis aufweisen. Werden jedoch nur "LHL"-Bitsequenzen mit einem solchen optimalen Verhältnis zur Generierung der Abtastphase zugelassen, so kann es sein, daß bei einer zu erwartenden störungsbehafteten Übertragung der HF-Signale keine Synchronisation möglich ist. Es werden daher auch schlechtere Puls/Pausen-Verhaltnisse für die "LHL"-Bitsequenzerkennung zugelassen.

Figur 9 zeigt in Anlehnung an Figur 8 ein weiteres Beispiel zur Durchführung des Soll-/Ist-Vergleiches in der Bitsequenz-Erkennungsschaltung 1403, bei dem ein Puls-/Pausen-Verhältnis von 70/30 bei der "LHL"-Bitsequenzerkennung zugelassen wird. Mit diesem Puls-/Pausen-Verhältnis ist ein akzeptabler Kompromiß zwischen einer "verrauschten ständigen" und einer "rauscharmen seltenen" DECT-spezifischen Informationsübertragung angegeben.

Zur Einstellung des 70/30 Puls-/Pausen-Verhältnis sind insbesondere das sechste Soll-Subdatenbit S-SDB bzw. das 1. Soll-Subdatenbit des zweiten Soll-Datenbits (b1, S-SDB₁), das 13. Soll-Subdatenbit S-SDB bzw. das achte Soll-Subdatenbit S-SDB des zweiten Soll-Datenbits S-DB (b8, S-SDBₙ₋₁) und das 14. Soll-Subdatenbit S-SDB bzw. das neunte Soll-Subdatenbit S-SDB des zweiten Soll-Datenbits S-DB (b9, S-SDBₙ), die jeweils mit zwei (**) markiert sind, als "Don't Care-Bits" DCB mit variablen H-/L-Bitwerten definiert. Darüber hinaus sind die mit einem (*) markierten Soll-Subdatenbits S-SDB der Soll-Subdatenbitfolge S-SDBF ebenfalls als "Don't Care-Bits" DCB mit variablen H-/L-Bitwerten definiert. Wegen der Bedeutung für die "LHL"-Bitsequenzerkennung werden die mit den zwei (**) markierten Soll-Subdatenbits S-SDB als "Don't Care-Bits" DCB 1. Ordnung bezeichnet, während die für die "LHL"-Bitsequenzerkennung unbedeutsamen, mit dem (*) markierten Soll-Subdatenbits S-SDB als "Don't Care-Bits" DCB 2. Ordnung bezeichnet werden.

Stimmt in der Figur 8 die Ist-Subdatenbitfolge I-SDBF mit den 28 (i1...i28) Ist-Subdatenbits I-SDB mit der Soll-Subdatenbitfolge S-SDBF überein, dann gibt die Bitsequenz-Erkennungsschaltung 1403 an die Selektionsschaltung 1404 ein Erkennungssignal ESI ab, mit dem dieser mitgeteilt wird, daß eine erste "LHL"-Bitsequenz der Präambel bzw. des Sync-Einleitungswortes SY-EW erkannt worden ist.

Das Erkennungssignal ESI wird nur abgegeben, wenn der Vergleicher VG eine Übereinstimmung der Subdatenbitfolgen I-SDBF, S-SDBF meldet. Die Selektionsschaltung 1404 ist beispielsweise als Zähler ausgebildet, der von dem Oszillator 141 getaktet wird und der durch das Erkennungssignal ESI immer bei der 5. Abtastung (Takt) zurückgesetzt wird.

Mit der Abgabe des Erkennungssignals ESI gibt die Bitsequenz-Erkennungsschaltung 1403 an eine Zähleinrichtung 1421 der Registriereinrichtung 142 die Statusmeldung SMO ab. Mit dieser Statusmeldung SMO wird der Zähleinrichtung 1421 mitgeteilt, daß die erste "LHL"-Bitsequenz erkannt worden ist. Die Zähleinrichtung 1421, die ebenfalls von dem Oszillator 141 getaktet wird, zählt die Anzahl der ihr übermittelten Statusmeldungen SMO.

Ist die vorstehend beschriebene Prozedur m-mal, wobei m generell kleiner als n ist, (z.B. m = 3), dann wartet die Zähleinrichtung 1421 auf ein Zusatzsignal ZS von der Bitgleichheit-Erkennungsschaltung 1420 und auf die Statusmel-SM3 der Geräusch-Erkennungsschaltung 143 sowie die Statusmeldung SM2 der Mikroprozessoranordnung 16. Liegen die Statusmeldungen SM2, SM3 bzw. das Zusatzsignal ZS vor, dann gibt die Zähleinrichtung 1421 über ein UND-Gatter 1422 die Statusmeldung SM1 an die Selektionsschaltung 1404 ab.

Mit dieser Statusmeldung SM1 wird die Zählfunktion der Selektionsschaltung 1404 gestoppt, wodurch die Abtastphase APH durch das letztmalige Zuführen des Erkennungssignals ESI generiert ist. Die Abtastphase APH befindet sich dadurch, daß die Selektionsschaltung 1404 bei der 5. Abtastung angehalten wird, nahezu in der Mitte des eines Datenbits DB des Ist-Datenstroms I-DS bzw. Datenstroms DS.

Mit der Übertragung des Zusatzsignals ZS wird der Zähleinrichtung 1421 von der Bitgleichheit-Erkennungsschaltung 1420 mitgeteilt, daß das Sync-Einleitungswort SY-EW zu Ende ist und das Sync-Bestätigungswort SY-BW anfängt. Dies ist das Zeichen, daß bis zu diesem Zeitpunkt die Abtastphase APH für die Synchronisation generiert sein muß.

Durch die Statusmeldung SM3 wird die Zähleinrichtung 1421, für den Fall, daß ein "verrauschter" Ist-Datenstrom I-DS bzw. Datenstrom DS erkannt wurde, zurückgesetzt.

Mit der Statusmeldung SM2 wird der Zähleinrichtung 1421 mitgeteilt, ob ein DECT-spezifischer Zeitschlitz TS vorliegt.

Die in bezug auf die Figur 8 vorstehend beschriebene Generierungsprozedur der Abtastphase APH gilt mit einer einzigen Einschränkung auch für den in der Figur 9 dargestellten Fall. Die Generierungsprozedur wird in jenem Fall nur durchgeführt, wenn folgende Bitkombinationen auftreten:

| b1 | b8 | b9 |
|---|---|---|
| 0 | 0 | 0 |
| 0 | 1 | 0 |
| 1 | 1 | 0 |
| 1 | 1 | 1 |

Die übrigen Bitkombinationen

| b1 | b8 | b9 |
|---|---|---|
| 0 | 0 | 1 |
| 1 | 0 | 1 |

und

| b1 | b8 | b9 |
|---|---|---|
| 1 | 0 | 0 |
| 0 | 1 | 1 |

werden entweder durch die Unterdrückungsschaltung 1400 unterdrückt bzw. nicht synchronisiert, weil keine Datenbitmitte gegeben ist.

## Patentansprüche

1. Abtastverfahren, bei dem
(a) ein synchronisationsrelevanten Teildatenstrom (SY-EW) eines digitalen Datenstroms (DS) in Form n-facher Abtastung jedes Datenbits (DB) abgetastet wird und dabei jeweils Subdatenbits (SDB) erzeugt werden,
(b) abgetastete Ist-Subdatenbits (I-SDB) von Ist-Datenbits (I-DB) eines Ist-Teildatenstroms (I-DS) als Ist-Subdatenbitfolge (I-SDBF) zwischengespeichert werden,
(c) die Ist-Subdatenbitfolge (I-SDBF) mit jeder Abtastung durch Speichern eines neuen Ist-Subdatenbits (I-SDB) und Löschen des am längsten zwischengespeicherten Ist-Subdatenbits (I-SDB) verändert wird,
(d) die jeweils zwischengespeicherte Ist-Subdatenbitfolge (I-SDBF) mit einer Soll-Subdatenbitfolge (S-SDBF) von Soll-Subdatenbits (S-SDB) verglichen wird, die mindestens zwei aufeinanderfolgenden Soll-Datenbits (S-DB) eines Soll-Teildatenstroms (S-DS) zugeordnet sind,
(e) eine Abtastphase (APH) festgelegt ist, wenn die Ist-Subdatenbitfolge (I-SDBF) mit der Soll-Subdatenbitfolge (S-SDBF) übereinstimmt,
**dadurch gekennzeichnet,** daß
(f) mindestens einem Soll-Datenbit (S-DB) "n" Soll-Subdatenbits (S-SDB) zugeordnet werden,
(g) von den Soll-Datenbits (S-DB) mit den "n" Soll-Subdatenbits (S-SDB) ein Soll-Datenbit (S-DB) "Don't Care Bits" (DCB) 1. Ordnung (**) enthält, die
(g1) in dem Soll-Datenbit (S-DB) derart angeordnet sind, daß Bitübergänge des die "Don't Care Bits" (DCB) 1. Ordnung (**) enthaltenden Soll-Datenbits (S-DB) zu benachbarten Soll-Datenbits (S-DB) erfaßt werden,
(g2) derart ausgewertet werden, daß das Auftreten einer speziellen Gruppe von Bitkombinationen der "Don't Care Bits" (DCB) 1. Ordnung (**) als Beleg für die in der Datenbitmitte liegende Abtastphase (APH) dient und davon abhängig die Ist-Subdatenbitfolgen (I-SDBF) mit der Soll-Subdatenbitfolge (S-SDBF) verglichen werden.

2. Abtastverfahren nach Anspruch 1, **dadurch gekennzeichnet,** daß der Soll-Teildatenstrom (S-DS) als "H-L-H"-Bitsequenz der Soll-Datenbits (S-DB) definiert wird.

3. Abtastverfahren nach Anspruch 1, **dadurch gekennzeichnet,** daß der Soll-Teildatenstrom (S-DS) als "L-H-L"-Bitsequenz der Soll-Datenbits (S-DB) definiert wird.

4. Abtastverfahren nach einem der Ansprüche 1 bis 3, da**durch gekennzeichnet,** daß drei der "n" Soll-Subdatenbits (S-SDB) des Soll-Datenbits (S-DB), ein erstes Soll-Subdatenbit (S-SDB₁), ein (n-1)-tes Soll-Subdatenbit (S-SDBₙ₋ ₁) und ein n-tes Soll-Subdatenbit (S-SDBₙ), als "Don't Care Bits" (DCB) 1. Ordnung (**) definiert werden.

5. Abtastverfahren nach den Ansprüchen 1, 3 und 4, **dadurch gekennzeichnet,** daß die von dem ersten Soll-Subdatenbit (S-SDB₁), dem (n-1)-ten Soll-Subdatenbit (S-SDBₙ₋₁) und dem n-ten Soll-Subdatenbit (S-SDBₙ) gebildete spezielle Gruppe von Bitkombinationen folgende Bitkombinationen enthält:
| S-SDB₁ | S-SDBₙ₋₁ | S-SDBₙ |
|---|---|---|
| 0 | 0 | 0 |
| 0 | 1 | 0 |
| 1 | 1 | 0 |
| 1 | 1 | 1 |

6. Abtastverfahren nach den Ansprüchen 1, 2 und 4, **dadurch gekennzeichnet,** daß die von dem ersten Soll-Subdatenbit (S-SDB₁), dem (n-1)-ten Soll-Subdatenbit (S-SDBₙ₋₁) und dem n-ten Soll-Subdatenbit (S-SDBₙ) gebildete spezielle Gruppe von Bitkombinationen folgende Bitkombinationen enthält:
| S-SDB₁ | S-SDBₙ₋₁ | S-SDBₙ |
|---|---|---|
| 1 | 1 | 1 |
| 1 | 0 | 1 |
| 0 | 0 | 1 |
| 0 | 0 | 0 |

7. Abtastverfahren nach einem der Ansprüche 1 bis 6, **dadurch gekennzeichnet,** daß die festgelegte Abtastphase (APH) für die Synchronisation des digitalen Datenstroms (DS) festgehalten wird, wenn die Vergleiche zwischen den Ist-Subdatenbitfolgen (I-SDBF) und der Soll-Subdatenbitfolge (S-SDBF) "m mit m < n" Übereinstimmungen liefern.

8. Verwendung des Abtastverfahrens nach einem der Ansprüche 1 bis 7 in einem Schnurlos-Telekommunikationsgerät.

9. Abtasteinrichtung, mit
(a) ersten Mitteln (141) zum Erzeugen von Subdatenbits (SDB) durch n-faches Abtasten eines synchronisationsrelevanten Teildatenstrom (SY-EW) eines digitalen Datenstroms (DS),
(b) zweiten Mitteln (1400...1402) zum Zwischengespeichern von Subdatenbitfolgen (I-SDBF) mit mehreren Ist-Subdatenbits (I-SDB), wobei
(b1) die Ist-Subdatenbits (I-SDB) dadurch entstehen, daß die ersten Mittel (141) Ist-Datenbits (I-DB) eines Ist-Teildatenstroms (I-DS) abtasten,
(b2) die ersten und zweiten Mittel (141, 1400...1402) derart miteinander verbunden sind, daß die Ist-Subdatenbitfolge (I-SDBF) mit jeder Abtastung durch Speichern eines neuen Ist-Subdatenbits (I-SDB) und Löschen des am längsten zwischengespeicherten Ist-Subdatenbits (I-SDB) verändert wird,
(c) dritten Mitteln (1403, 1404, 1421, 1422) zur Festlegung einer Abtastphase (APH), die mit den ersten und zweiten Mitteln (141, 1400...1402) verbunden sind und derart ausgebildet sind, daß
(c1) die zwischengespeicherten Ist-Subdatenbitfolgen (I-SDBF) mit einer Soll-Subdatenbitfolge (S-SDBF) von Soll-Subdatenbits (S-SDB) verglichen werden, die mindestens zwei aufeinanderfolgenden Soll-Datenbits (S-DB) eines Soll-Teildatenstroms (S-DS) zugeordnet sind,
(c2) die Abtastphase (APH) festgelegt ist, wenn die Ist-Subdatenbitfolge (I-SDBF) mit der Soll-Subdatenbitfolge (S-SDBF) übereinstimmt,
**dadurch gekennzeichnet,** daß
(d) die Soll-Subdatenbitfolge (S-SDBF) derart ausgebildet ist, daß mindestens einem Soll-Datenbit (S-DB) "n" Soll-Subdatenbits (S-SDB) zugeordnet werden, wobei von den Soll-Datenbits (S-DB) mit den "n" Soll-Subdatenbits (S-SDB) ein Soll-Datenbit (S-DB) "Don't Care Bits" (DCB) 1. Ordnung (**) enthält,
(e) die "Don't Care Bits" (DCB) 1. Ordnung (**) in dem Soll-Datenbit (S-DB) derart angeordnet sind, daß Bitübergänge des die "Don't Care Bits" (DCB) 1. Ordnung (**) enthaltenden Soll-Datenbits (S-DB) zu benachbarten Soll-Datenbits (S-DB) erfaßt werden,
(f) die "Don't Care Bits" (DCB) 1. Ordnung (**) derart ausgewertet werden, daß das Auftreten einer speziellen Gruppe von Bitkombinationen der "Don't Care Bits" (DCB) 1. Ordnung (**) als Beleg für die in der Datenbitmitte liegende Abtastphase (APH) dient und davon abhängig die Ist-Subdatenbitfolgen (I-SDBF) mit der Soll-Subdatenbitfolge (S-SDBF) verglichen werden.

10. Abtasteinrichtung nach Anspruch 10, **dadurch gekennzeichnet,** daß die dritten Mittel (1403, 1404, 1421, 1422) zur Festlegung der Abtastphase (APH) als Gatterlogik in einem ASIC-Baustein realisiert sind.

11. Schnurlos-Telekommunikationsgerät, insbesondere eine Basisstation (BS) oder eine Mobilstation (MS), mit einer in einer Steuereinrichtung (14) integrierten Abtasteinrichtung (140) nach Anspruch 9 oder 10, **dadurch gekennzeichnet,** daß Bitgleichheit-Erkennungsmittel (1420) vorgesehen sind, die eingangsseitig mit den ersten Mitteln (1400...1402) und ausgangsseitig mit den dritten Mitteln (1403, 1404, 1421, 1422) verbunden sind und die mit dem Erkennen von zwei gleichen Ist-Datenbits (I-DB) in den ersten Mitteln (1400...1402) ein Steuersignal (ZS) an die dritten Mitteln (1403, 1404, 1421, 1422) abgeben, die, wenn bereits "m" Vergleichsübereinstimmungen gezählt worden sind, die Abtastphase (APH) festhalten.

12. Schnurlos-Telekommunikationsgerät nach Anspruch 11, **dadurch gekennzeichnet,** daß Geräusch-Erkennungsmittel (143) vorgesehen sind, die eingangsseitig mit den ersten Mitteln (1400...1402) und ausgangsseitig mit den dritten Mitteln (1403, 1404, 1421, 1422) verbunden sind und die bei in den ersten Mitteln (1400...1402) zwischengespeicherten "verrauschten" Ist-Datenbits (I-DB) die von diesen Datenbits (I-DB) aktivierten dritten Mittel (1403, 1404, 1421, 1422) zur Festlegung der Abtastphase (APH) zurücksetzen.

## Claims

1. Sampling method, in which
(a) a data stream component (SY-EW), which is relevant to synchronization, of a digital data stream (DS) in the form of n-fold sampling of each data bit (DB) is sampled and, in the process, subdata bits (SDB) are respectively generated,
(b) sampled actual subdata bits (I-SDB) of actual data bits (I-DB) of an actual data stream component (I-DS) are buffered as an actual subdata bit sequence (I-SDBF),
(c) the actual subdata bit sequence (I-SDBF) is changed with each sampling by storing a new actual subdata bit (I-SDB) and deleting the actual subdata bit (I-SDB) which has been buffered the longest,
(d) the respectively buffered actual subdata bit sequence (I-SDBF) is compared with a reference subdata bit sequence (S-SDBF) of reference subdata bits (S-SDB) which are assigned to at least two successive reference data bits (S-DB) of a reference data stream component (S-DS),
(e) a sampling phase (APH) is determined if the actual subdata bit sequence (I-SDBF) corresponds to the reference subdata bit sequence (S-SDBF),
characterized in that
(f) "n" reference subdata bits (S-SDB) are assigned to at least one reference data bit (S-DB),
(g) of the reference data bits (S-DB) with the "n" reference subdata bits (S-SDB), one reference data bit (S-DB) contains "Don't Care Bits" (DCB) of the 1st order (**), which
(g1) are arranged in the reference data bit (S-DB) in such a way that bit transitions between the reference data bit (S-DB) containing the "Don't Care Bits" (DCB) of the 1st order (**) and adjacent reference data bits (S-DB) are detected, and
(g2) are evaluated in such a way that the occurrence of a specific group of bit combinations of the "Don't Care Bits" (DCB) of the 1st order (**) is used as a check for the sampling phase (APH) located in the centre of the data bit and the actual subdata bit sequences (I-SDBF) are compared as a function thereof with the reference subdata bit sequence (S-SDBF).

2. Sampling method according to Claim 1, characterized in that the reference data stream component (S-DS) is defined as an "H-L-H" bit sequence of the reference data bits (S-DB).

3. Sampling method according to Claim 1, characterized in that the reference data stream component (S-DS) is defined as an "L-H-L" bit sequence of the reference data bits (S-DB).

4. Sampling method according to one of Claims 1 to 3, characterized in that three of the "n" reference subdata bits (S-SDB) of the reference data bit (S-DB), a first reference subdata bit (S-SDB₁), a (n-1)-th reference subdata bit (S-SDBₙ₋₁) and an n-th reference subdata bit (S-SDBₙ), are defined as "Don't Care Bits" (DCB) of the 1st order (**).

5. Sampling method according to Claims 1, 3 and 4, characterized in that the specific group of bit combinations formed by the first reference subdata bit (S-SDB₁), the (n-1)-th reference subdata bit (S-SDBₙ₋₁) and the n-th reference subdata bit (S-SDBₙ) contains the following bit combinations:
| S-SDB₁ | S-SDBₙ₋₁ | S-SDBₙ |
|---|---|---|
| 0 | 0 | 0 |
| 0 | 1 | 0 |
| 1 | 1 | 0 |
| 1 | 1 | 1 |

6. Sampling method according to Claims 1, 2 and 4, characterized in that the specific group of bit combinations formed by the first reference subdata bit (S-SDB₁), the (n-1)-th reference subdata bit (S-SDBₙ₋₁) and the n-th reference subdata bit (S-SDBₙ) contains the following bit combinations:
| S-SDB₁ | S-SDBₙ₋₁ | S-SDBₙ |
|---|---|---|
| 1 | 1 | 1 |
| 1 | 0 | 1 |
| 0 | 0 | 1 |
| 0 | 0 | 0 |

7. Sampling method according to one of Claims 1 to 6, characterized in that the determined sampling phase (APH) for the synchronization of the digital data stream (DS) is retained if the comparisons between the actual subdata bit sequences (I-SDBF) and the reference subdata bit sequence (S-SDBF) supply "m with m < n" correspondences.

8. Use of the sampling method according to one of Claims 1 to 7 in a cordless telecommunications device.

9. Sampling device, having
(a) first means (141) for generating subdata bits (SDB) by means of n-fold sampling of a data stream component (SY-EW), which is relevant to synchronization, of a digital data stream (DS),
(b) second means (1400...1402) for buffering subdata sequences (I-SDBF) with a plurality of actual subdata bits (I-SDB),
(b1) the actual subdata bits (I-SDB) being produced by virtue of the fact that the first means (141) sample actual data bits (I-DB) of an actual data stream component (I-DS),
(b2) the first and second means (141, 1400...1402) are connected to one another in such a way that the actual subdata bit sequence (I-SDBF) is changed with every sampling by storing a new actual subdata bit (I-SDB) and deleting the actual subdata bit (I-SDB) which has been buffered the longest,
(c) third means (1403, 1404, 1421, 1422) for determining a sampling phase (APH), which are connected to the first and second means (141, 1400...1402) and are constructed in such a way that
(c1) the buffered actual subdata bit sequences (I-SDBF) are compared with a reference subdata bit sequence (S-SDBF) of reference subdata bits (S-SDB) which are assigned to at least two successive reference data bits (S-DB) of a reference data bit component (S-DS),
(c2) the sampling phase (APH) is determined if the actual subdata bit sequence (I-SDBF) corresponds to the reference subdata bit sequence (S-SDBF),
characterized in that
(d) the reference subdata bit sequence (S-SDBF) is constructed in such a way that "n" reference subdata bits (S-SDB) are assigned to at least one reference data bit (S-DB), of the reference data bits (S-DB) with the "n" reference subdata bits (S-SDB), one reference data bit (S-DB) containing "Don't Care Bits" (DCB) of the 1st order (**),
(e) the "Don't Care Bits" (DCB) of the 1st order (**) are arranged in the reference data bit (S-DB) in such a way that bit transitions between the reference data bit (S-DB) containing the "Don't Care Bits" (DCB) of the 1st order (**) and adjacent reference data bits (S-DB) are detected,
(f) the "Don't Care Bits" (DCB) of the 1st order (**) are evaluated in such a way that the occurrence of a specific group of bit combinations of the "Don't Care Bits" (DCB) of the 1st order (**) is used as a check for the sampling phase (APH) located in the centre of the data bit and the actual subdata bit sequences (I-SDBF) are compared as a function thereof with the reference subdata bit sequence (S-SDBF).

10. Sampling device according to Claim 10, characterized in that the third means (1403, 1404, 1421, 1422) for determining the sampling phase (APH) are realized as a gate logic in an ASIC module.

11. Cordless telecommunications device, in particular a base station (BS) or a mobile station (MS), having a sampling device (140) according to Claim 9 or 10 integrated in a control device (14), characterized in that bit identity detection means (1420) are provided, which means (1420) are connected on the input side to the first means (1400...1402) and on the output sides to the third means (1403, 1404, 1421, 1422) and which transmit a control signal (ZS) to the third means (1403, 1404, 1421, 1422) when two identical actual data bits (I-DB) are detected in the first means (1400...1402), which third means retain the sampling phase (APH) if "m" comparison correspondences have already been counted.

12. Cordless telecommunications device according to Claim 11, characterized in that noise detection means (143) are provided which are connected on the input side to the first means (1400...1402) and on the output side to the third means (1403, 1404, 1421, 1422) and which, in the event of actual data bits (I-DB) which are buffered in the first means (1400...1402) being subject to noise reset the third means (1403, 1404, 1421, 1422) activated by these data bits (I-DB), in order to fix the sampling phase (APH).

## Revendications

1. Procédé d'échantillonnage, selon lequel
(a) on échantillonne un flux de données partiel (SY-EW), déterminant pour la synchronisation, d'un flux de données (DS) numérique sous forme d'un échantillonnage n-aire de chaque bit de données (DB) et on produit ainsi à chaque fois des sous-bits de données (SDB),
(b) on mémorise temporairement des sous-bits de données réels (I-SDB) échantillonés de bits de données réels (I-DB) d'un flux de données partiel réel (I-DS) en tant que séquence de sous-bits de données réelle (I-SDBF),
(c) on fait varier la séquence de sous-bits de données réelle (I-SDBF) à chaque échantillonnage en mémorisant un nouveau sous-bit de données réel (I-SDB) et en effaçant le sous-bit de données réel (I-SDB) mémorisé temporairement depuis le plus long temps,
(d) on compare la séquence de sous-bits de données réelle (I-SDBF) à chaque fois mémorisée temporairement avec une séquence (S-SDBF) de sous-bits de données de consigne (S-SDB) qui sont associés au moins à deux bits de données de consigne (S-DB) successifs d'un flux de données partiel de consigne (S-DS),
(e) on fixe une phase d'échantillonnage (APH) lorsque la séquence de sous-bits de données réelle (I-SDBF) coïncide avec la séquence de sous-bits de données de consigne (S-SDBF),
caractérisé par le fait que
(f) on associe à au moins un bit de données de consigne (S-DB) "n" sous-bits de données de consigne (S-SDB),
(g) parmi les bits de données de consigne (S-DB) comportant les "n" sous-bits de données de consigne (S-SDB), un bit de données de consigne (S-DB) contient des "Don't Care Bits" (DCB) de premier ordre (**),
(g1) qui sont placés dans le bit de données de consigne (S-DB) de telle sorte que des transitions de bits du bit de données de consigne (S-DB), contenant les "Don't Care Bits" (DCB) de premier ordre (**), à des bits de données de consigne (S-DB) voisins soient détectées,
(g2) et qui sont évalués de telle sorte que l'apparition d'un groupe spécial de combinaisons binaires des "Don't Care Bits" (DCB) de premier ordre (**) sert de justification pour la phase d'échantillonnage (APH) se trouvant au centre du bit de données et que, en fonction de ce résultat, on compare les séquences de sous-bits de données réelles (I-SDBF) avec la séquence de sous-bits de données de consigne (S-SDBF).

2. Procédé d'échantillonnage selon la revendication 1, caractérisé par le fait que le flux de données partiel de consigne (S-DS) est défini comme une séquence de bits "H-L-H" de données de consigne (S-DB).

3. Procédé d'échantillonnage selon la revendication 1, caractérisé par le fait que le flux de données partiel de consigne (S-DS) est défini comme une séquence de bits "L-H-L" de données de consigne (S-DB).

4. Procédé d'échantillonnage selon l'une des revendications 1 à 3, caractérisé par le fait que trois des "n" sous-bits de données de consigne (S-SDB) du bit de données de consigne (S-DB), à savoir un premier sous-bit de données de consigne (S-SDB₁), un (n-1)^{ème} sous-bit de données de consigne (S-SDBₙ₋₁) et un n^{ème} sous-bit de données de consigne (S-SDBₙ), sont définis comme "Don't Care Bits" (DCB) de premier ordre (**).

5. Procédé d'échantillonnage selon les revendications 1, 3 et 4, caractérisé par le fait que le groupe spécial, formé par le premier sous-bit de données de consigne (S-SDB₁), le (n-1)^{ème} sous-bit de données de consigne (S-SDBₙ₋₁) et le nème sous-bit de données de consigne (S-SDBₙ), de combinaisons binaires contient les combinaisons binaires suivantes :
| S-SDB₁ | S-SDBₙ₋₁ | S-SDBₙ |
|---|---|---|
| 0 | 0 | 0 |
| 0 | 1 | 0 |
| 1 | 1 | 0 |
| 1 | 1 | 1 |

6. Procédé d'échantillonnage selon les revendications 1, 2 et 4, caractérisé par le fait que le groupe spécial, formé par le premier sous-bit de données de consigne (S-SDB₁), le (n-1)^{ème} sous-bit de données de consigne (S-SDBₙ₋₁) et le nème sous-bit de données de consigne (S-SDBₙ), de combinaisons binaires contient les combinaisons binaires suivantes :
| S-SDB₁ | S-SDBₙ₋₁ | S-SDBₙ |
|---|---|---|
| 1 | 1 | 1 |
| 1 | 0 | 1 |
| 0 | 0 | 1 |
| 0 | 0 | 0 |

7. Procédé d'échantillonnage selon l'une des revendications 1 à 6, caractérisé par le fait que la phase d'échantillonnage (APH) pour la synchronisation du flux de données (DS) numérique est maintenue lorsque les comparaisons entre les séquences de sous-bits de données réelles (I-SDBF) et la séquence de sous-bits de données de consigne (S-SDBF) fournit "m avec m < n" égalités.

8. Utilisation du procédé d'échantillonnage selon l'une des revendications 1 à 7 dans un appareil de télécommunication sans fil.

9. Dispositif d'échantillonnage comportant
(a) des premiers moyens (141) pour produire des sous-bits de données (SDB) par un échantillonnage n-aire d'un flux de données partiel (SY-EW), déterminant pour la synchronisation, d'un flux de données (DS) numérique,
(b) des seconds moyens (1400 à 1402) pour mémoriser temporairement des séquences de sous-bits de données réelles (I-SDBF) comportant plusieurs sous-bits de données réels (I-SDB),
(b1) les sous-bits de données réels (I-SDB) étant obtenus par le fait que les premiers moyens (141) échantillonnent des bits de données réels (I-DB) d'un flux de données partiel réel (I-DS),
(b2) les premiers et seconds moyens (141, 1400 à 1402) étant reliés entre eux de telle sorte que la séquence de sous-bits de données réelle (I-SDBF) varie à chaque échantillonnage par mémorisation d'un nouveau sous-bit de données réel (I-SDB) et par effacement du sous-bit de données réel (I-SDB) mémorisé temporairement depuis le plus long temps,
(c) des troisièmes moyens (1403, 1404, 1421, 1422) pour fixer une phase d'échantillonnage (APH), qui sont reliés aux premiers et seconds moyens (141, 1400 à 1402) et qui sont conçus de telle sorte
(c1) que les séquences de sous-bits de données réelles (I-SDBF) mémorisées temporairement soient comparées à une séquence (S-SDBF) de sous-bits de données de consigne (S-SDB) de sous-bits de données de consigne (S-SDB) qui sont associés au moins à deux bits de données de consigne (S-DB) successifs d'un flux de données partiel de consigne (S-DS),
(c2) et que la phase d'échantillonnage (APH) soit fixée lorsque la séquence de sous-bits de données réelle (I-SDBF) coïncide avec la séquence de sous-bits de données de consigne (S-SDBF),
caractérisé par le fait que
(d) la séquence de sous-bits de données de consigne (S-SDBF) est conçue de telle sorte que "n" sous-bits de données de consigne (S-SDB) soient associés à au moins un bit de données de consigne (S-DB), sachant qu'un bit de données de consigne (S-DB) parmi les bits de données de consigne (S-DB) comportant les "n" sous-bits de données de consigne (S-SDB) contient des "Don't Care Bits" (DCB) de premier ordre (**),
(e) les "Don't Care Bits" (DCB) de premier ordre (**) sont placés dans le bit de données de consigne (S-DB) de telle sorte que des transitions de bits du bit de données de consigne (S-DB), contenant les "Don't Care Bits" (DCB) de premier ordre (**), à des bits de données de consigne (S-DB) voisins soient détectées,
(f) les "Don't Care Bits" (DCB) de premier ordre (**) sont évalués de telle sorte que l'apparition d'un groupe spécial de combinaisons binaires des "Don't Care Bits" (DCB) de premier ordre (**) sert de justification pour la phase d'échantillonnage (APH) se trouvant au centre du bit de données et que, en fonction de ce résultat, les séquences de sous-bits de données réelles (I-SDBF) sont comparées à la séquence de sous-bits de données de consigne (S-SDBF).

10. Dispositif d'échantillonnage selon la revendication 9, caractérisé par le fait que les troisièmes moyens (1403, 1404, 1421, 1422) pour fixer la phase d'échantillonnage (APH) sont mis en oeuvre sous forme de circuits de portes logiques dans un composant ASIC.

11. Appareil de télécommunication sans fil, notamment une station de base (BS) ou une station mobile (MS), comportant un dispositif d'échantillonnage (140), selon la revendication 9 ou 10, intégré dans un dispositif de commande (14), caractérisé par le fait qu'il est prévu des moyens de détection d'égalité des bits (1420) qui sont reliés en entrée aux seconds moyens (1400 à 1402) et en sortie aux troisièmes moyens (1403, 1404, 1421, 1422) et qui, à la détection de deux bits de données réels (I-DB) égaux dans les seconds moyens (1400 à 1402), fournissent un signal de commande (ZS) aux troisièmes moyens (1403, 1404, 1421, 1422) qui maintiennent la phase d'échantillonnage (APH) lorsque "m" concordances ont déjà été comptées lors des comparaisons.

12. Appareil de télécommunication sans fil selon la revendication 11, caractérisé par le fait qu'il est prévu des moyens de détection de bruit (143) qui sont reliés en entrée aux seconds moyens (1400 à 1402) et en sortie aux troisièmes moyens (1403, 1404, 1421, 1422) et qui, pour des bits de données réels (I-DB) "bruités" mémorisés temporairement dans les seconds moyens (1400 à 1402), remettent à l'état initial les troisièmes moyens (1403, 1404, 1421, 1422) activés par ces bits de données (I-DB) en vue de la fixation de la phase d'échantillonnage (APH).
